# EUROPEAN PATENT APPLICATION

(11) **EP 4 408 120 A1**
(43) Date of publication of application: **31.07.2024**
(21) Application number: 21957765.7
(22) Date of filing: 22.09.2021
(51) Int. Cl.: H04W 76/27, H04W 36/06

(54) **BWP SWITCHING METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Stöckeler, Ferdinand
(86) International application number: PCT/CN2021/119708
(87) International publication number: WO 2023/044624

(57) **Abstract**

The present invention relates to a BWP switching method and apparatus, and a storage medium. The BWP switching method comprises: in response to a terminal being configured with an initial BWP and a separate small data packet BWP and the terminal being triggered to enter an inactive state from a connected state, determining a target BWP to which the terminal switches, the target BWP comprising the initial BWP or the separate small data packet BWP; and switching from an active BWP to the target BWP. By means of the present invention, BWP switching configuration is achieved when the terminal enters an inactive state from a connected state.

## Description

### TECHNICAL FIELD

The present invention relates to the field of communication technology, and more particularly to a BWP switching method and apparatus and a storage medium.

### BACKGROUND

In a design of a new ratio (NR) standard, a bandwidth adaptation for reception is introduced. By applying the technology of the bandwidth adaptation for reception, a terminal may monitor a downlink control channel on a smaller bandwidth and receive a small amount of downlink transmission data. When the terminal has a large amount of data to receive, an entire bandwidth is used for reception. In order to better support a terminal that is not able to use an entire carrier bandwidth and the bandwidth adaptation for reception, the NR standard defines a new concept, i.e., a bandwidth part (BWP).

In a BWP technology, a network device configures an initial bandwidth part (initial BWP) for a terminal in an idle/inactive state. When the terminal enters a radio resource control inactive (RRC_INACTIVE) state from a radio resource control connection (RRC_CONNECTED), an active BWP is switched to the initial BWP, and the terminal receives a paging message, a synchronization signal and PBCH block (SSB), a system message and initiates a random access, etc. on the initial BWP.

In the NR release 17, a configured grant (CG) small data transmission (SDT) in the inactive state is provided. In the SDT technology, a separate BWP for SDT (a separate SDT BWP, e.g., a separate CG-SDT BWP) may be configured for a terminal that supports the SDT. When the terminal that supports the SDT is configured with the separate CG-SDT BWP, the terminal may perform an SDT on the separate SDT BWP, thereby ensuring a bandwidth requirement for the SDT and reducing a congestion level on the initial BWP.

In the case where the network device configures the initial BWP and the separate CG-SDT BWP for the terminal, when the terminal enters the inactive state from the connected state, there is a problem of determining which one of the initial BWP and the separate CG-SDT BWP the terminal should switch to.

### SUMMARY

In order to overcome problems existing in the related art, the present invention provides a BWP switching method and apparatus, and a storage medium.

According to a first aspect of embodiments of the present invention, a BWP switching method is provided, which is performed by a terminal. The BWP switching method includes: in response to the terminal being configured with an initial BWP and a separate small data transmission (SDT) BWP and the terminal being triggered to enter from a connected state to an inactive state, determining a target BWP to be switched to for the terminal, in which the target BWP includes the initial BWP or the separate SDT BWP; and switching from an active BWP to the target BWP.

In an implementation, determining the BWP to be switched to for the terminal includes at least one of: determining the target BWP for the terminal based on a communication protocol, in which the target BWP is the initial BWP or the separate SDT BWP; determining the target BWP to be switched to for the terminal based on a predefined condition, in which the target BWP is the initial BWP or the separate SDT BWP; determining the target BWP to be switched to for the terminal based on indication information, in which the indication information is used to indicate the target BWP to be switched to when entering the inactive state from the connected state, and the target BWP is the initial BWP or the separate SDT BWP.

In an implementation, the target BWP to be switched to for the terminal is the initial BWP, and the BWP switching method further includes: in response to existing a small data packet to be transmitted, and in response to a TA corresponding to the SDT being valid; switching from the initial BWP to the separate SDT BWP and performing a semi-statically configured SDT.

In an implementation, in response to the separate SDT BWP being not configured with a synchronization signal and PBCH block (SSB), determining that the TA corresponding to the SDT is valid includes: determining that the TA corresponding to the SDT is valid based on a first parameter reference value and a first parameter measurement value, in which the first parameter reference value includes a parameter measurement value measured on the initial BWP or an active BWP before entering the inactive state, and the first parameter measurement value is obtained by measuring a beam, the same as a beam measured to obtain the first parameter reference value, on the initial BWP after entering the inactive state.

In an implementation, in response to the BWP to be switched to for the terminal being determined to be the initial BWP based on the communication protocol or the indication information, and the separate SDT BWP being configured with an SSB, determining that the TA corresponding to the SDT is valid include: determining that the TA corresponding to the SDT is valid based on a second parameter reference value and a second parameter measurement value. The second parameter reference value includes a parameter measurement value measured on the initial BWP, the separate SDT BWP or an active BWP before entering the inactive state, and the second parameter measurement value is obtained by measuring a beam, the same as a beam measured to obtain the second parameter reference value, on the separate SDT BWP or the initial BWP after entering the inactive state.

In an implementation, the BWP switching method further includes: in response to the SDT being completed, switching from the separate SDT BWP to the initial BWP.

In an implementation, in response to the target BWP to be switched to for the terminal being the separate SDT BWP, the method further includes: in response to a small data packet to be transmitted existing, and a TA corresponding to the SDT being valid; performing a semi-statically configured SDT on the separate SDT BWP.

In an implementation, the separate SDT BWP includes the initial BWP, or the separate SDT BWP is configured with one or more parameters for at least one of the following signals or channels: SSB, paging message, system message, and random access channel; and determining that the TA corresponding to the SDT is valid includes: determining that the TA corresponding to the SDT is valid based on a third parameter reference value and a third parameter measurement value. The third parameter reference value includes a parameter measurement value measured on the separate SDT BWP or an active BWP before entering the inactive state, and the third parameter measurement value is obtained by measuring a beam, the same as a beam measured to obtain the third parameter reference value, on the separate SDT BWP after entering the inactive state.

In an implementation, the target BWP to be switched to for the terminal is determined to be the separate SDT BWP based on the communication protocol or the indication information, and no SSB is configured in the separate SDT BWP; and determining that the TA corresponding to the SDT is valid includes: determining that the TA corresponding to the SDT is valid based on a fourth parameter reference value and a fourth parameter measurement value. The fourth parameter reference value includes a parameter measurement value measured on the initial BWP or an active BWP before entering the inactive state, and the fourth parameter measurement value is obtained by measuring a beam, the same as a beam measured to obtain the fourth parameter reference value, on the initial BWP after entering the inactive state.

In an implementation, the method further includes: determining that the small data packet to be transmitted exists, and determining that the TA corresponding to the SDT is invalid; and performing a random access-based SDT on the initial BWP or the separate SDT BWP.

In an implementation, determining the target BWP to be switched to for the terminal based on the predefined condition includes: determining that a condition for switching to the separate SDT BWP is met, and switching to the separate SDT BWP; or determining that a condition for switching to the separate SDT BWP is not met, and switching to the initial BWP. The condition for switching to the separate SDT BWP includes: the separate SDT BWP being configured with one or more parameters for at least one of the following signals or channels: SSB, paging message, system message, and random access channel.

According to a second aspect of embodiments of the present invention, a BWP switching method is provided, which is performed by a network device. The BWP switching method includes: sending indication information. The indication information is used to indicate a target BWP to be switched to when entering an inactive state from a connected state, and the target BWP includes an initial BWP or a separate SDT BWP.

In an implementation, the target BWP includes the initial BWP, the separate SDT BWP is not configured with an SSB, and the method further includes: configuring the initial BWP with measurement information of a beam, the same as a beam used for measurement of a first parameter reference value. The first parameter reference value is a parameter measurement value measured on the initial BWP or an active BWP.

In an implementation, the target BWP includes the initial BWP, the separate SDT BWP is configured with an SSB, and the method further includes: configuring the separate SDT BWP with measurement information of a beam, the same as a beam used for measurement of a second parameter reference value. The second parameter reference value includes a parameter measurement value measured on the initial BWP, the separate SDT BWP or an active BWP before entering the inactive state.

In an implementation, the target BWP includes the separate SDT BWP, the separate SDT BWP includes the initial BWP or the separate SDT BWP is configured with one or more parameters for at least one of the following signals or channels: SSB, paging message, system message, and random access channel, and the method further includes: configuring the separate SDT BWP with measurement information of a beam, the same as a beam used for measurement of a third parameter reference value. The third parameter reference value includes a parameter measurement value measured on the separate SDT BWP or an active BWP before entering the inactive state.

In an implementation, the target BWP includes the separate SDT BWP, no SSB is configured in the separate SDT BWP, and the method further includes: configuring the initial BWP with measurement information of a beam, the same as a beam used for measurement of a fourth parameter reference value. The fourth parameter reference value includes a parameter measurement value on measured the initial BWP or an active BWP before entering the inactive state.

According to a third aspect of embodiments of the present invention, a BWP switching apparatus is provided, including: a processing unit configured to, in response to determining that the terminal is configured with an initial BWP and a separate SDT BWP and the terminal is triggered to enter from a connected state to an inactive state, determine a target BWP to be switched to for the terminal, in which the target BWP includes the initial BWP or the separate SDT BWP; and switch from an active BWP to the target BWP.

In an implementation, determining the target BWP to be switched to for the terminal includes at least one of: determining the target BWP to be switched to for the terminal based on a communication protocol; determining the target BWP to be switched to for the terminal based on a predefined condition; determining the target BWP to be switched to for the terminal based on indication information, in which the indication information is used to indicate the target BWP to be switched to when entering the inactive state from the connected state.

In an implementation, the target BWP is the initial BWP, and the processing unit is further configured to determine that a small data packet to be transmitted exists, and determine that a TA corresponding to the SDT is valid; and switch from the initial BWP to the separate SDT BWP and perform a semi-statically configured SDT.

In an implementation, the separate SDT BWP is not configured with a synchronization signal and PBCH block (SSB), and the processing unit is configured to: determine that the TA corresponding to the SDT is valid based on a first parameter reference value and a first parameter measurement value. The first parameter reference value includes a parameter measurement value measured on the initial BWP or an active BWP before entering the inactive state, and the first parameter measurement value is obtained by measuring a beam, the same as a beam measured to obtain the first parameter reference value, on the initial BWP after entering the inactive state.

In an implementation, the target BWP to be switched to for the terminal is determined to be the initial BWP based on the communication protocol or the indication information, the separate SDT BWP is configured with an SSB, and the processing unit is configured to: determine that the TA corresponding to the SDT is valid based on a second parameter reference value and a second parameter measurement value. The second parameter reference value includes a parameter measurement value measured on the initial BWP, the separate SDT BWP or an active BWP before entering the inactive state, and the second parameter measurement value is obtained by measuring a beam, the same as a beam measured to obtain the second parameter reference value, on the separate SDT BWP or the initial BWP after entering the inactive state.

In an implementation, the processing unit is further configured to: determine that the SDT is completed, and switch from the separate SDT BWP to the initial BWP.

In an implementation, the target BWP is the separate SDT BWP, and the processing unit is further configured to: determine that a small data packet to be transmitted exists, and determine that a TA corresponding to the SDT is valid; and perform a semi-statically configured SDT on the separate SDT BWP.

In an implementation, the separate SDT BWP includes the initial BWP, or the separate SDT BWP is configured with one or more parameters for at least one of the following signals or channels: SSB, paging message, system message, and random access channel; and the processing unit is configured to: determine that the TA corresponding to the SDT is valid based on a third parameter reference value and a third parameter measurement value. The third parameter reference value includes a parameter measurement value measured on the separate SDT BWP or an active BWP before entering the inactive state, and the third parameter measurement value is obtained by measuring a beam, the same as a beam measured to obtain the third parameter reference value, on the separate SDT BWP after entering the inactive state.

In an implementation, the target BWP to be switched to for the terminal is determined to be the separate SDT BWP based on the communication protocol or the indication information, and no SSB is configured in the separate SDT BWP; and the processing unit is configured to: determine that the TA corresponding to the SDT is valid based on a fourth parameter reference value and a fourth parameter measurement value. The fourth parameter reference value includes a parameter measurement value measured on the initial BWP or an active BWP before entering the inactive state, and the fourth parameter measurement value is obtained by measuring a beam, the same as a beam measured to obtain the fourth parameter reference value, on the initial BWP after entering the inactive state.

In an implementation, the processing unit is further configured to: determine that the small data packet to be transmitted exists, and determine that the TA corresponding to the SDT is invalid; and perform a random access-based SDT on the initial BWP or the separate SDT BWP.

In an implementation, the processing unit is configured to determine the target BWP to be switched to for the terminal based on the predefined condition by using following manners: determining that a condition for switching to the separate SDT BWP is met, and switching to the separate SDT BWP; or determining that a condition for switching to the separate SDT BWP is not met, and switching to the initial BWP. The condition for switching to the separate SDT BWP includes: the separate SDT BWP being configured with one or more parameters for at least one of the following signals or channels: SSB, paging message, system message, and random access channel.

According to a fourth aspect of embodiments of the present invention, a BWP switching apparatus is provided, including: a sending unit configured to send indication information. The indication information is used to indicate a target BWP to be switched to when entering an inactive state from a connected state, and the target BWP includes an initial BWP or a separate SDT BWP.

In an implementation, the BWP switching apparatus is further includes a processing unit, the target BWP includes the initial BWP, the separate SDT BWP is not configured with an SSB, and the processing unit is configured to: configure the initial BWP with measurement information of a beam, the same as a beam used for measurement of a first parameter reference value. The first parameter reference value is a parameter measurement value measured on the initial BWP or an active BWP.

In an implementation, the BWP switching apparatus is further includes a processing unit, the target BWP includes the initial BWP, the separate SDT BWP is configured with an SSB, and the processing unit is configured to: configure the separate SDT BWP with measurement information of a beam, the same as a beam used for measurement of a second parameter reference value. The second parameter reference value includes a parameter measurement value measured on the initial BWP, the separate SDT BWP or an active BWP before entering the inactive state.

In an implementation, the BWP switching apparatus is further includes a processing unit, the target BWP includes the separate SDT BWP, the separate SDT BWP includes the initial BWP or the separate SDT BWP is configured with one or more parameters for at least one of the following signals or channels: SSB, paging message, system message, and random access channel, and the processing unit is configured to: configure the separate SDT BWP with measurement information of a beam, the same as a beam used for measurement of a third parameter reference value. The third parameter reference value includes a parameter measurement value measured on the separate SDT BWP or an active BWP before entering the inactive state.

In an implementation, the BWP switching apparatus is further includes a processing unit, the target BWP includes the separate SDT BWP, no SSB is configured in the separate SDT BWP, and the processing unit is configured to: configure the initial BWP with measurement information of a beam, the same as a beam used for measurement of a fourth parameter reference value. The fourth parameter reference value includes a parameter measurement value on measured the initial BWP or an active BWP before entering the inactive state.

According to a fifth aspect of embodiments of the present invention, a BWP switching device is provided, including: a processor; and a memory configured to store processor-executable instructions. The processor is configured to: execute the BWP switching method as described in the first aspect or any embodiment of the first aspect.

According to a sixth aspect of embodiments of the present invention, a BWP switching device is provided, including: a processor; and a memory configured to store processor-executable instructions. The processor is configured to: execute the BWP switching method as described in the second aspect or any embodiment of the second aspect.

According to a seventh aspect of embodiments of the present invention, a storage medium is provided. The storage medium has stored therein instructions that, when executed by a processor of a terminal, cause the terminal to perform the BWP switching method as described in the first aspect or any embodiment of the first aspect.

According to an eighth aspect of embodiments of the present invention, a storage medium is provided. The storage medium has stored therein instructions that, when executed by a processor of a terminal, cause the terminal to perform the BWP switching method as described in the second aspect or any embodiment of the second aspect.

The technical solutions provided in embodiments of the present invention may include following advantageous effects. The terminal is triggered to enter the inactive state from the connected state, the active BWP is switched to the initial BWP or the separate SDT BWP, thus realizing a BWP switching configuration when entering the inactive state from the connected state.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram of a wireless communication system according to an illustrative embodiment.
FIG. 2 shows a schematic diagram of switching from an active BWP to an initial BWP.
FIG. 3 shows a schematic diagram of a communication scenario where an initial BWP and a separate CG-SDT BWP are configured and a connected state may be changed to an inactive state.
FIG. 4 is a flow chart showing a BWP switching method according to an illustrative embodiment.
FIG. 5A is a flow chart showing an SDT according to an illustrative embodiment.
FIG. 5B is a flow chart showing an SDT according to an illustrative embodiment.
FIG. 6A is a flow chart showing an SDT according to an illustrative embodiment.
FIG. 6B is a flow chart showing an SDT according to an illustrative embodiment.
FIG. 7 is a flow chart showing a BWP switching method according to an illustrative embodiment.
FIG. 8 is a block diagram showing a BWP switching apparatus according to an illustrative embodiment.
FIG. 9 is a block diagram showing a BWP switching apparatus according to an illustrative embodiment.
FIG. 10 is a block diagram showing a device for BWP switching according to an illustrative embodiment.
FIG. 11 is a block diagram showing a device for BWP switching according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention.

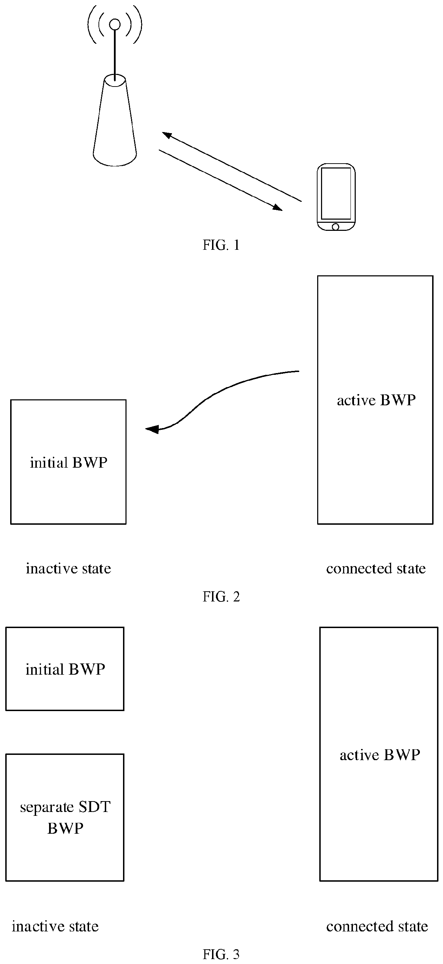

An access method provided by embodiments of the present invention may be applied to a wireless communication system shown in FIG. 1. Referring to FIG. 1, the wireless communication system includes a terminal and a network device. Information is sent and received between the terminal and the network device via wireless resources.

It may be understood that the wireless communication system shown in FIG. 1 is only illustrative. The wireless communication system may also include other network devices, such as a core network device, a wireless relay device, and a wireless backhaul device, which are not shown in FIG 1. The number of network devices and the number of terminals included in the wireless communication system are not limited in embodiments of the present invention.

It may be further understood that the wireless communication system in embodiments of the present invention is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, the wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP) or the like, or may also be a gNB in a NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in embodiments of the present invention.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device, a vehicle-mounted device, or the like that has a wireless connection function. At present, some examples of the terminal are a smart phone (a mobile phone), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in embodiments of the present invention.

In the related art, a terminal state may include a connected state (also called an RRC_CONNCETED state), an inactive state (also called an RRC_INACTIVE state), and an idle state (also called an RRC_IDLE state). In the NR release 17, the SDT in the inactive state is provided. The SDT may be understood as a data transmission that may be done without entering the connected state, which can avoids wasting a time-frequency resource, shortens a data transmission delay, and reduces a terminal energy consumption.

The SDT may be performed in two manners: a random access-based SDT (RA-based SDT) and a semi-statically configured SDT (also called a configured grant-SDT, CG-SDT). Regarding the SDT based on the random access process, the terminal transmits an uplink small data packet on a physical uplink shared channel (PUSCH) for message A (msgA) or message 3 (msg3) via a two-step random access or a four-step random access. Regarding the semi-statically configured SDT, when the connected state is changed to the inactive state, the network device transmits an RRC resource release (RRC release) message carrying information such as semi-statically configured time-frequency domain resource allocation information and determination information of a timing advance (TA) validity required for the SDT. When the terminal has uplink data to transmit in the inactive state, it first performs the TA validity determination, a synchronization signal reference signal received power (SS-RSRP) determination and a data packet size determination. When all conditions such as a TA validity, an SS-RSRP, and a data packet size are satisfied, a semi-statically configured resource configured by the network device is used to perform the SDT. Otherwise, for example, when a size of an uplink data packet to be transmitted by the terminal exceeds a threshold value, the terminal performs a four-step random access process to enter the connection state, and performs the data transmission in the connection state.

Furthermore, in a 4G network, it defaults on that all terminals can handle a carrier bandwidth of 20MHZ. Such a hard indicator will increase the cost of 4G terminals, but it may disperse a frequency domain resource occupied by the transmission channels to an entire bandwidth and obtain a frequency diversity gain. Since the 5G NR needs to support a very large system bandwidth (up to 400MHZ), it is unreasonable to make all different terminals be able to receive data on the entire bandwidth. For example, an IoT data transmission generally requires a smaller bandwidth. A design of the 5G NR standard needs to consider the following two factors.
1) Not all terminals are required to have an ability to perform reception on the entire carrier bandwidth. The NR standard needs to introduce a special design to handle terminals with different bandwidth capabilities.
2) If all terminals are required to perform reception on the entire carrier bandwidth, in addition to the terminal cost, an increase in a power consumption caused by the reception the entire system bandwidth should also be considered.

Therefore, a new technology (i.e., the bandwidth adaptation for reception) is introduced in the design of the NR standard. By applying the technology of the bandwidth adaptation for reception, when an amount of data to be sent is small, the terminal may monitor a downlink control channel on a smaller bandwidth and receive a small amount of downlink transmission data; when the terminal has a large amount of data to receive, a larger bandwidth is used for reception. In order to better support a terminal that is not able to use the entire carrier bandwidth and the bandwidth adaptation for reception, the NR standard defines the BWP.

Furthermore, an NR protocol stipulates that the network device may configure up to 4 BWPs for the connected state, and BWP switching may be performed via downlink control information (DCI), a switch timer or a semi-statically configured configuration. When the amount of data is small, a narrower BWP may be used as an active BWP, and a data packet may be transmitted on the active BWP. When the amount of data is large, a wider BWP may be switched to via the DCI and data is transmitted on the wider BWP.

In addition, in the related art, the network device will also configure an initial BWP for a terminal in an idle/inactive state. When the terminal enters the inactive state from the connected state, the active BWP will be switched to the initial BWP. FIG. 2 shows a schematic diagram of switching from the active BWP to the initial BWP. The terminal may receive a paging message, an SSB, or a system message, or initiate a random access, etc. on the initial BWP.

Furthermore, it is proposed in a Release 17 SDT WI that a separate SDT BWP may be configured for the CG-SDT. When a terminal that supports an SDT is configured with the separate SDT BWP, the terminal may perform the SDT on the separate SDT BWP, thereby meeting a bandwidth requirement for the SDT and reducing a congestion level on the initial BWP.

However, when the network device configures the initial BWP and the separate CG-SDT BWP for the terminal, and the terminal enters the inactive state from the connected state, there is no discussion on determining which one of the initial BWP and the separate CG-SDT BWP the terminal should switch to.

In view of this, embodiments of the present invention provide a BWP switching method to determine a target BWP to be switched to when a terminal enters an inactive state from a connected state.

The BWP switching method provided by embodiments of the present invention is performed in a communication scenario where the terminal is configured with an initial BWP and a separate CG-SDT BWP, and enters the inactive state from the connected state. FIG. 3 shows a schematic diagram of a communication scenario where an initial BWP and a separate CG-SDT BWP are configured and a connected state may be changed to an inactive state.

In embodiments of the present invention, the BWP switching method is provided for a terminal configured with the initial BWP and the separate CG-SDT BWP to determine whether a BWP switched to is the initial BWP or the separate CG-SDT BWP when the terminal enters the inactive state from the connected state.

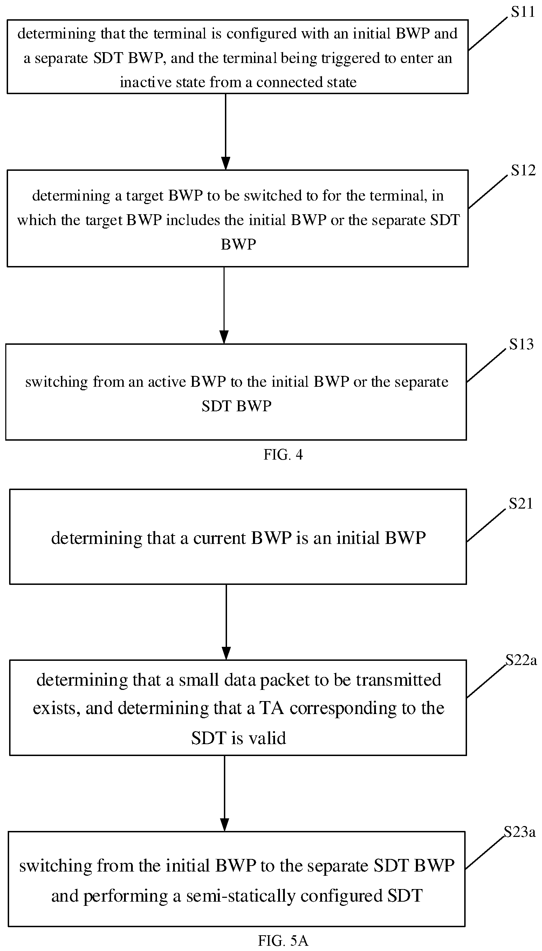

FIG. 4 is a flow chart showing a BWP switching method according to an illustrative embodiment. As shown in FIG. 4, the BWP switching method is used in a terminal and includes the following steps.

In S11, it is determined that the terminal is configured with an initial BWP and a separate CG-SDT BWP, and the terminal is triggered to enter an inactive state from a connected state.

In S 12, a target BWP to be switched to for the terminal is determined, and the target BWP includes the initial BWP or the separate CG-SDT BWP.

In S13, the initial BWP or the separate CG-SDT BWP is switched to from an active BWP.

In embodiments of the present invention, the terminal is configured with the initial BWP and the separate CG-SDT BWP. In response to the terminal being triggered to enter the inactive state from the connected state, the initial BWP or the separate CG-SDT BWP to be switched to is determined, and the active BWP is switched to the initial BWP or the separate CG-SDT BWP.

It should be noted that the aforementioned steps S11 and S12 may be executed simultaneously or in any order that one follows the other. A time slot for performing the two steps is not limited in the embodiments of the present invention.

In an implementation, in embodiments of the present invention, when the terminal determines whether the target BWP to be switched to is the initial BWP or the separate CG-SDT BWP, it may adopt at least one of following manners.

In manner 1, the target BWP to be switched to for the terminal is determined based on a communication protocol.

In an example, the communication protocol stipulates that a terminal (for example, it may include a terminal that supports the SDT and a terminal that does not support the SDT) always switches to the initial BWP in a case where the terminal enters the inactive state from the connected state. That is, the target BWP to be switched to for the terminal is determined to be the initial BWP based on the communication protocol.

In another example, the communication protocol stipulates that a terminal that supports the SDT switches to the separate CG-SDT BWP in a case where it enters the inactive state from the connected state. That is, the target BWP to be switched to for the terminal is determined to be the separate CG-SDT BWP based on the communication protocol.

In manner 2, the target BWP to be switched to for the terminal is determined based on a predefined condition.

The predefined condition may include a condition for switching to the separate CG-SDT BWP, and/or a condition for switching to the initial BWP. In an embodiment, only one of them may be included, and a terminal that meets the condition is switched to a corresponding target BWP; and a terminal that does not meet the condition is switched to another target BWP.

In an example, the predefined condition includes the condition for switching to the separate CG-SDT BWP. The condition for switching to the separate CG-SDT BWP includes at least one of: the separate CG-SDT BWP being configured with an SSB, a paging message, a system message, or a random access channel configuration. On the one hand, the terminal determines that the condition for switching to the separate CG-SDT BWP is met and the separate CG-SDT BWP is switched to. Alternatively, on the other hand, the terminal determines that the condition for switching to the separate CG-SDT BWP is not met and the initial BWP or other BWP(s).

In another example, the predefined condition includes the condition for switching to the initial BWP. The condition for switching to the initial BWP includes at least one of: the initial BWP being not configured with an SSB, a paging message, a system message, or a random access channel configuration. On the one hand, the terminal determines that the condition for switching to the initial BWP is met and the initial BWP is switched to. Alternatively, on the other hand, the terminal determines that the condition for switching to the initial BWP is not met and the separate CG-SDT BWP is switched to.

In another example, the predefined condition includes the condition for switching to the initial BWP and the condition for switching to the separate CG-SDT BWP. The condition for switching to the initial BWP and the condition for switching to the separate CG-SDT BWP may refer to the aforementioned expressions. On the one hand, the terminal determines that the condition for switching to the initial BWP is met and the initial BWP is switched to; and the terminal determines that the condition for switching to the separate CG-SDT BWP is met and the separate CG-SDT BWP is switched to. The terminal determines that the above two conditions are not met and another BWP is switched to.

In embodiments of the present invention, determining the target BWP to be switched to for the terminal based on the predefined condition may be understood as an implicit way of determining the target BWP to be switched to. For example, through an implicit determination, when the terminal enters the inactive state from the connected state, the separate CG-SDT BWP is it switched to. For example, when the network device configures parameters required for one or more processes such as SSB, paging, system message reception, and random access channel (RACH) process for the separate CG-SDT BWP, the terminal that supports the SDT switches to the separate CG-SDT BWP; otherwise, it switches to the initial BWP.

In manner 3, the target BWP to be switched to for the terminal is determined based on indication information. The indication information is used to indicate the target BWP to be switched to when entering the inactive state from the connected state.

In embodiments of the present invention, the network device may instruct the terminal to enter the inactive state from the connected state and switch to a certain BWP according to the indication information. On the one hand, the indication information may instruct the terminal to enter the inactive state from the connected state and switch to the initial BWP. In response to the terminal entering the inactive state from the connected state, the terminal determines to switch to the initial BWP based on the indication information. On the other hand, the indication information may instruct the terminal to enter the inactive state from the connected state and switch to the separate CG-SDT BWP. In response to the terminal entering the inactive state from the connected state, the terminal determines to switch to the separate CG-SDT BWP based on the indication information.

In an example, the indication information used to indicate the target BWP to be switched to when the terminal enters the inactive state from the connected state may be an information element of an existing signaling, for example, it may be indicated via RRC release signaling, or it may also be indicated via indication information sent by the network device to indicate a BWP switching during an SDT execution.

In embodiments of the present invention, in a case where the terminal is configured with the separate CG-SDT BWP and the initial BWP, by applying any one of the above implementations in the manner 1, the manner 2 and the manner 3, it may determine the target BWP for the change from the connected state to the inactive state and the active BWP is switched to a determined target BWP.

In the BWP switching method provided by embodiments of the present invention, the terminal may perform the SDT. The SDT includes a semi-statically configured SDT, or a random access-based SDT.

In the BWP switching method provided by embodiments of the present invention, before or at the same time that the terminal performs the SDT, a TA validity determination needs to be performed.

In an implementation, a current BWP is the initial BWP. In a case where the terminal determines that a small data packet to be transmitted exists and determines that a TA corresponding to the SDT is valid, the separate CG-SDT BWP is switched to from the initial BWP and the semi-statically configured SDT is performed.

FIG. 5A is a flow chart showing an SDT according to an illustrative embodiment. The method may be implemented alone or in combination with other methods in embodiments of the present invention, which is not limited in the embodiments of the present invention. For example, the method may be implemented together with the aforementioned embodiment shown in FIG. 4, or illustratively may be implemented together with subsequent embodiments. As shown in FIG. 5A, an SDT method is used in a terminal and includes the following steps.

In S21, it is determined that a current BWP is an initial BWP.

In S22a, it is determined that a small data packet to be transmitted exists, and it is determined that a TA corresponding to the SDT is valid.

In S23a, the separate CG-SDT BWP is switched to from the initial BWP and a semi-statically configured SDT is performed.

In another implementation of embodiments of the present invention, the current BWP is the initial BWP. In a case where the terminal determines that the small data packet to be transmitted exists and determines that the TA corresponding to the SDT is invalid, a random access-based SDT is performed on the initial BWP or the separate CG-SDT BWP.

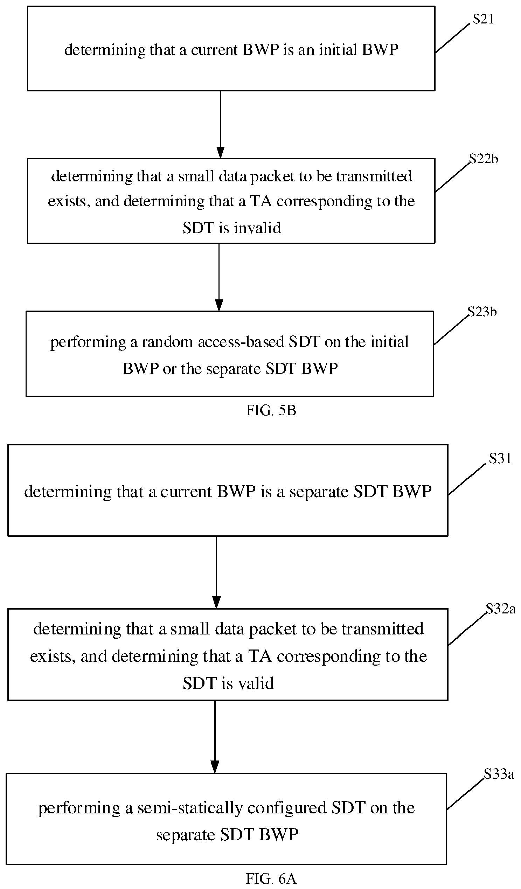

FIG. 5B is a flow chart showing an SDT according to an illustrative embodiment. The method may be implemented alone or in combination with other methods in embodiments of the present invention, which is not limited in the embodiments of the present invention. For example, the method may be implemented together with the aforementioned embodiment shown in FIG. 4, or illustratively may be implemented together with subsequent embodiments. As shown in FIG. 5B, an SDT method is used in a terminal and includes the following steps.

In S21, it is determined that a current BWP is an initial BWP.

In S22b, it is determined that a small data packet to be transmitted exists, and it is determined that a TA corresponding to the SDT is invalid.

In S23b, a random access-based SDT is performed on the initial BWP or the separate CG-SDT BWP.

In an implementation, the current BWP is the separate CG-SDT BWP. On the one hand, in a case where the terminal determines that the small data packet to be transmitted exists and determines that the TA corresponding to the SDT is valid, the semi-statically configured SDT is performed on the separate CG-SDT BWP.

FIG. 6A is a flow chart showing an SDT according to an illustrative embodiment. The method may be implemented alone or in combination with other methods in embodiments of the present invention, which is not limited in the embodiments of the present invention. For example, the method may be implemented together with the aforementioned embodiment shown in FIG. 4, or illustratively may be implemented together with subsequent embodiments. As shown in FIG. 6A, an SDT method is used in a terminal and includes the following steps.

In S31, it is determined that a current BWP is a separate CG-SDT BWP.

In S32a, it is determined that a small data packet to be transmitted exists, and it is determined that a TA corresponding to the SDT is valid.

In S33a, a semi-statically configured SDT is performed on the separate CG-SDT BWP.

In another implementation of embodiments of the present invention, in a case where the terminal determines that the small data packet to be transmitted exists and determines that the TA corresponding to the SDT is invalid, a random access-based SDT is performed on the initial BWP or the separate CG-SDT BWP.

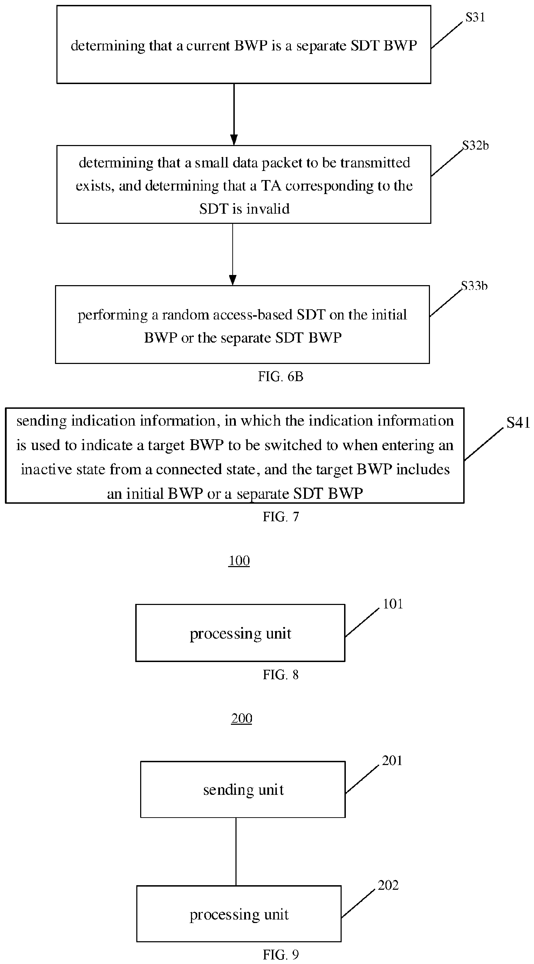

FIG. 6B is a flow chart showing an SDT according to an illustrative embodiment. The method may be implemented alone or in combination with other methods in embodiments of the present invention, which is not limited in the embodiments of the present invention. For example, the method may be implemented together with the aforementioned embodiment shown in FIG. 4, or illustratively may be implemented together with subsequent embodiments. As shown in FIG. 6B, an SDT method is used in a terminal and includes the following steps.

In S31, it is determined that a current BWP is a separate CG-SDT BWP.

In S32b, it is determined that a small data packet to be transmitted exists, and it is determined that a TA corresponding to the SDT is invalid.

In S33b, a random access-based SDT is performed on the initial BWP or the separate CG-SDT BWP.

In the BWP switching method provided by embodiments of the present invention, during an implementation of a method for the terminal to perform the SDT, the terminal may determine the current BWP, perform the TA validity determination, and perform the SDT based on the target BWP to be switched to when entering the inactive state from the connected state.

In embodiments of the present invention, in a first example, the target BWP switched to is the initial BWP when the terminal enters the inactive state from the connected state.

In an implementation of embodiment of the present invention, based on the communication protocol provision, it is determined that the terminal always switches to the initial BWP when entering the inactive state from the connected state. Alternatively, based on the predefined condition, it is determined that the terminal switches to the initial BWP when entering the inactive state from the connected state. Alternatively, based on the indication information, it is determined that the terminal switches to the initial BWP when entering the inactive state from the connected state.

In response to switching to the initial BWP when the terminal enters the inactive state from the connected state, and the terminal having the small data packet to be transmitted, the terminal switches from the initial BWP to the separate CG-SDT BWP for transmission. If no SDT exists currently, it will always remain on the initial BWP. In addition, before performing the SDT, the terminal performs the TA validity determination by performing an SSB measurement.

In embodiments of the present invention, in a case where the terminal switches to the initial BWP when entering the inactive state from the connected state, different TA validity determination manners may be further adopted based on whether the separate CG-SDT BWP is configured with an SSB.

In an implementation, in a case where the terminal enters the inactive state from the connected state and determines to switch to the initial BWP based on the communication protocol, predefined condition or indication information, and the separate CG-SDT BWP is not configured with the SSB, in such a case the terminal performs the SSB measurement on the initial BWP, and uses a measured parameter measurement value as a parameter reference value for a subsequent TA validity determination. This parameter reference value is referred to as a first parameter reference value hereafter. After the terminal enters the inactive state from the connected state, before performing the SDT, the terminal measures a parameter value of a beam, the same as a beam measured to obtain the first parameter reference value, on the initial BWP, and this parameter value measured on the initial BWP is referred to as a first parameter measurement value hereafter. Based on the first parameter reference value and the first parameter measurement value, it is determined whether the TA corresponding to the SDT is valid.

In an embodiment, a parameter obtained by performing the SSB measurement is a reference signal receiving power (RSRP) as an example. The terminal performs the SSB measurement on the initial BWP and retains a measured RSRP value as a reference value. The terminal performs the SSB measurement on the initial BWP to determine an RSRP value as the reference value, which may be performed before entering the inactive state, or may be performed at the same time or after entering the inactive state.

For example, before entering the inactive state, the terminal switches to the initial BWP to perform the SSB measurement and retains the measured RSRP value as the reference value. The terminal switches from the connected state to the inactive state. Before the terminal initiates the SDT in the inactive state, the terminal measures the RSRP value of the same SSB subset, used in the RSRP reference value measurement, on the initial BWP as the measurement value. Alternatively, the terminal switches from the connected state to the inactive state. In the inactive state, the terminal switches to the initial BWP, performs the SSB measurement on the initial BWP, and retains the measured RSRP value as the reference value. Before the terminal initiates the SDT in the inactive state, the terminal performs the SSB measurement again in the initial BWP, and measures the RSRP value of the same SSB subset used in the RSRP reference value measurement as the measurement value.

The terminal compares the measurement with the reference value to determine whether the TA is valid. On the basis that the TA is valid, the terminal switches to the separate CG-SDT BWP to perform the SDT. Otherwise, on the basis of meeting the SDT condition, a random access-based SDT (RA-based SDT) is performed on the initial BWP.

In another manner, in a case where the terminal enters the inactive state from the connected state and determines to switch to the initial BWP based on the communication protocol, predefined condition or indication information, and the separate CG-SDT BWP is not configured with the SSB, in such a case the terminal performs the SSB measurement on the active BWP, and uses a measured parameter measurement value as a parameter reference value for the subsequent TA validity determination. This parameter reference value is still referred to as the first parameter reference value hereafter. In order to ensure that the terminal performs the SSB measurement on the same beam, the network device configures the initial BWP with beam measurement information of a beam, the same as the beam used for the measurement of the first parameter reference value. The terminal switches from the connected state to the inactive state. The terminal measures a parameter value of the beam, the same as the beam measured to obtain the first parameter reference value, on the initial BWP, and this parameter valued measured is still referred to as the first parameter measurement value hereafter. Based on the first parameter reference value and the first parameter measurement value, it is determined whether the TA corresponding to the SDT is valid.

In an embodiment, a parameter obtained by performing the SSB measurement is an RSRP as an example. Before entering the inactive state, the terminal first performs the SSB measurement on the active BWP and uses a measured RSRP as a reference value. In addition, the network device will configure a separate SSB subset beam and other measurement quantities (that are the same as the reference value) for the initial BWP for each terminal via a high-level signaling. That is, the network device configures the initial BWP with the measurement information of the beam, the same as the beam used for the measurement of the first parameter reference value. In response to determining that the terminal enters the inactive state and is going to initiate the SDT, the SSB measurement configured by the network device is first measured on the initial BWP to verify the TA validity. For example, an SSB subset that is the same SSB subset used in the RSRP reference value measurement is measured. The terminal compares the measurement with the reference value to determine whether the TA is valid. On the basis that the TA is valid, the terminal switches to the separate CG-SDT BWP to perform the SDT. Otherwise, on the basis of meeting the SDT condition, the RA-based SDT is performed on the initial BWP.

In embodiments of the present invention, in a case where the terminal enters the inactive state from the connected state, the target BWP to be switched to for the terminal is determined to be the initial BWP based on the communication protocol or indication information, and the separate CG-SDT BWP is configured with the SSB, in such a case the terminal performs the SSB measurement on the initial BWP, the separate CG-SDT BWP or the activate BWP, and uses a measured parameter measurement value as a parameter reference value for the subsequent TA validity determination. This parameter reference value is referred to as a second parameter reference value hereafter. The terminal enters the inactive state from the connected state, and before performing the SDT, the terminal measures a parameter value of a beam, the same as a beam measured to obtain the second parameter reference value, on the initial BWP or the separate CG-SDT BWP, and this parameter value measured is referred to as a second parameter measurement value hereafter. Based on the second parameter reference value and the second parameter measurement value, it is determined whether the TA corresponding to the SDT is valid.

In a case where the terminal enters the inactive state from the connected state, the target BWP to be switched to for the terminal is determined to be the initial BWP based on the communication protocol or indication information, and the separate CG-SDT BWP is configured with the SSB, in such a case the SSB on the initial BWP may be measured to obtain the second parameter measurement value, the SSB on the separate CG-SDT BWP may be measured to obtain the second parameter measurement value. If the second parameter measurement value is obtained by measuring the SSB on the initial BWP, details may be referred to the execution process of measuring the SSB on the initial BWP in the case where the separate CG-SDT BWP is not configured with the SSB in the above embodiments, which will not be described again here. The following describes a process of measuring the SSB on the separate CG-SDT BWP to obtain the second parameter measurement value, and determining whether the TA corresponding to the SDT valid is based on the second parameter reference value and the second parameter measurement value.

In an embodiment, a parameter obtained by performing the SSB measurement is an RSRP as an example. The terminal performs the SSB measurement on the separate CG-SDT BWP to determine an RSRP value as the reference value, which may be performed before entering the inactive state, or may be performed at the same time or after entering the inactive state.

For example, before the terminal enters the inactive state, it switches to the separate CG-SDT BWP to perform the SSB measurement and retains the measured RSRP value as the reference value. The terminal enters the inactive state from the connected state and switches from the separate CG-SDT BWP to the initial BWP. Before performing the SDT in the inactive state, the terminal first switches to the separate CG-SDT BWP to perform the SSB measurement, and measures the RSRP value of the same SSB subset used in the RSRP reference value measurement as the measurement value. Alternatively, the terminal switches from the connected state to the inactive state, switches to the separate CG-SDT BWP in the inactive state to perform the SSB measurement, and retains the measured RSRP value as the reference value. In the inactive state, the terminal switches from the separate CG-SDT BWP to the initial BWP. Before the terminal initiates the SDT, the terminal switches to the separate CG-SDT BWP again to perform the SSB measurement, and measures the RSRP value of the same SSB subset used in the RSRP reference value measurement as the measurement value.

The terminal compares the measurement with the reference value to determine whether a TA is valid. The SDT is performed on the basis that the TA is valid. Otherwise, on the basis of meeting the SDT condition, it is checked whether a random access resource exists on the separate CG-SDT BWP. If the random access resource exists on the separate CG-SDT BWP, the random access-based SDT is performed on the separate CG-SDT BWP. If no random access resource exists on the separate CG-SDT BWP, the initial BWP is switched back to and the random access-based SDT is performed.

In another embodiment, a parameter obtained by performing the SSB measurement is an RSRP as an example. Before entering the inactive state, the terminal first performs the SSB measurement on the active BWP and uses a measured RSRP as a reference value. At the same time, the network device configures a measurement quantity such as the SSB beam (the same as that for the reference value) for the separate CG-SDT BWP via a high-level signaling. That is, the separate SDT BWP is configured with measurement information of a beam, the same as a beam used for measurement of the second parameter reference value. The terminal enters the inactive state and switches to the initial BWP. When it is determined that the SDT is required, the initial BWP is first switched to the separate CG-SDT BWP, and at the same time the TA validity determination is performed by measuring the measurement quantity configured by the network device. The SDT is performed on the basis that the TA is valid. Otherwise, on the basis of meeting the SDT condition, it is checked whether a random access resource exists on the separate CG-SDT BWP. If the random access resource exists on the separate CG-SDT BWP, the random access-based SDT is performed on the separate CG-SDT BWP. If no random access resource exists on the separate CG-SDT BWP, the initial BWP is switched back to and the random access-based SDT is performed.

In the BWP switching method provided by the above embodiments of the present invention, the target BWP to be switched to for the terminal is determined to be the initial BWP based on the communication protocol or the indication information, and the SDT is performed on the separate CG-SDT BWP. If the SDT is determined to be completed, the initial BWP is switched to from the separate CG -SDT BWP. For example, if the terminal is still in the inactive state after the SDT is completed, it will switch from the separate CG-SDT BWP to the initial BWP. For example, after receiving the RRC release signaling, the terminal will switch from the separate CG-SDT BWP to the initial BWP.

In embodiments of the present invention, described is an example situation where the terminal enters the inactive state from the connected state and the target BWP to be switched to is the separate CG-SDT BWP, the current BWP is determined, the TA validity determination is performed, and the SDT is performed. It should be noted that the following situation is only a possible implementation, and the implementation for other situations may be similar to the following implementation.

In embodiments of the present invention, in a case where the terminal enters the inactive state from the connected state and the target BWP to be switched to is the separate CG-SDT BWP, the terminal needs to be a terminal that supports the SDT, and the protocol stipulates or the base station configures the separate CG-SDT BWP for the terminal that supports the SDT.

In an implementation of embodiments of the present invention, it is determined based on the communication protocol regulations that the terminal always switches to the separate CG-SDT BWP when entering the inactive state from the connected state. Alternatively, it is determined based on predefined condition that the terminal enters the inactive state from the connected state and switches to the separate CG-SDT BWP. Alternatively, it is determined based on the indication information that the terminal enters the inactive state from the connected state and switches to the separate CG-SDT BWP.

In response to determining that the terminal enters the inactive state from the connected state and the separate CG-SDT BWP is switched to, when the terminal has the SDT, it is determined whether the TA is valid. In a case where the TA is valid, the semi-statically configured SDT is performed on the separate CG-SDT BWP. In a case where the TA is invalid, the random access-based SDT is performed on the separate CG-SDT BWP or the initial BWP.

In embodiments of the present invention, in a case where the terminal enters the inactive state from the connected state and switches to the separate CG-SDT BWP, different TA validity determination manners may be adopted based on whether the separate CG-SDT BWP is configured with the SSB.

In an implementation, in order to avoid frequent BWP switching, the protocol stipulates that one or more parameters for at least one of the following signals or channels: SSB, paging message, system message, and random access channel is configured on the separate SDT BWP. Alternatively, the initial BWP is included within a bandwidth range of the separate CG-SDT BWP, that is, the separate CG-SDT BWP includes the initial BWP.

In an implementation, in response to the terminal entering the inactive state from the connected state, it is determined to switch to the separate CG-SDT BWP based on the communication protocol, the predefined condition or the indication information, or through any other means, and the separate CG-SDT BWP includes the initial BWP or the separate SDT BWP is configure with one or more parameters for at least one of the following signals or channels: SSB, paging message, system message, and random access channel. The terminal performs the SSB measurement on the separate CG-SDT BWP or the active BWP, and uses a measured parameter measurement value as a parameter reference value for the subsequent TA validity determination. This parameter reference value is referred to as a third parameter reference value hereafter. In response to the terminal entering the inactive state, and before performing the SDT, a parameter value of a beam, the same as a beam measured to obtain the third parameter reference value, is measured on the separate CG-SDT BWP, and this parameter value measured is referred to as a third parameter measurement value hereafter. Based on the third parameter reference value and the third parameter measurement value, it is determined whether the TA corresponding to the SDT is valid.

In an embodiment, a parameter obtained by performing the SSB measurement is an RSRP as an example. The terminal performs the SSB measurement on the separate CG-SDT BWP to determine an RSRP value as the reference value, which may be performed before entering the inactive state, or may be performed at the same time or after entering the inactive state.

For example, before the terminal enters the inactive state, it switches to the separate CG-SDT BWP to perform the SSB measurement and retains the measured RSRP value as the reference value. The terminal enters the inactive state from the connected state and switches to the separate CG-SDT BWP. Before initiating the SDT, the SSB measurement is performed on the separate CG-SDT BWP, and the RSRP value of the same SSB subset used in the RSRP reference value measurement is measured as the measurement value. Alternatively, the terminal switches from the connected state to the inactive state, switches to the separate CG-SDT BWP, performs the SSB measurement on the separate CG-SDT BWP, and retains the measured RSRP value as the reference value. Before the terminal initiates the SDT, the terminal performs the SSB measurement again on the separate CG-SDT BWP, and measures the RSRP value of the same SSB subset used in the RSRP reference value measurement as the measurement value.

The terminal compares the measurement with the reference value to determine whether the TA is valid. The SDT is performed on the basis that the TA is valid. Otherwise, on the basis of meeting the SDT condition, it is checked that whether a random access resource exists on the separate CG-SDT BWP. If the random access resource exists on the separate CG-SDT BWP, the random access-based SDT is performed on the separate CG-SDT BWP. If no random access resource exists on the separate CG-SDT BWP, the initial BWP is switched back to and the random access-based SDT is performed.

In another embodiment, a parameter obtained by performing the SSB measurement is an RSRP as an example. Before entering the inactive state, the terminal first performs the SSB measurement on the active BWP and uses a measured RSRP as a reference value. At the same time, the network device configures the SSB beam and other measurement quantities (that are the same as the reference value) for the separate CG-SDT BWP via a high-level signaling. That is, the separate SDT BWP is configured with measurement information of a beam, the same as a beam used for measurement of the third parameter reference value. After the terminal enters the inactive state, it will switch to the separate CG-SDT BWP. If it is determined that the SDT is required, a corresponding SSB needs to be measured first to verify the TA validity. The SDT is performed on the basis that the TA is valid. Otherwise, on the basis of meeting the SDT condition, it is checked that whether a random access resource exists on the separate CG-SDT BWP. If the random access resource exists on the separate CG-SDT BWP, the random access-based SDT is performed on the separate CG-SDT BWP. If no random access resource exists on the separate CG-SDT BWP, the initial BWP is switched back to and the random access-based SDT is performed.

In an implementation, a parameter obtained by performing the SSB measurement is an RSRP as an example. In embodiments of the present invention, it is determined based on the communication protocol that a random access resource has to be configured on the separate CG-SDT BWP to implement the random access-based SDT on the separate CG-SDT BWP.

The terminal enters the inactive state from the connection state, and the target BWP to be switched to for the terminal is determined to be the separate CG-SDT BWP based on the communication protocol or the indication information or through any other means, and the SSB is not configured in the separate CG-SDT BWP. The terminal performs the SSB measurement on the initial BWP or the active BWP, and uses a measured parameter measurement value as a parameter reference value for the subsequent TA validity determination. This parameter reference value is referred to as a fourth parameter reference value hereafter. Before performing the SDT, a parameter value of a beam, the same as a beam measured to obtain the fourth parameter reference value, is measured on the initial BWP, and is referred to as a fourth parameter measurement value hereafter. Based on the fourth parameter reference value and the fourth parameter measurement value, it is determined whether the TA corresponding to the SDT is valid. In some implementations, the above steps may be performed to determine the fourth parameter measurement value after entering the inactive state and before performing the SDT.

In an embodiment, a parameter obtained by performing the SSB measurement is an RSRP as an example. The terminal performs the SSB measurement on the initial BWP to determine an RSRP value as the reference value, which may be performed before entering the inactive state, or may be performed at the same time or after entering the inactive state.

For example, before entering the inactive state, the terminal switches to the initial BWP to perform the SSB measurement and retains the measured RSRP value as the reference value. The terminal enters the inactive state from the connected state and switches from the initial BWP to the separate CG-SDT BWP. If the terminal needs to perform the SDT, it first switches from the separate CG-SDT BWP to the initial BWP to measure the RSRP value of the same SSB subset used in the RSRP reference value measurement as the measurement value. Alternatively, the terminal switches from the connected state to the inactive state. In the inactive state, the terminal switches to the initial BWP to perform the SSB measurement and retains the measured RSRP value as the reference value. The terminal switches from the initial BWP to the separate CG-SDT BWP. Before the terminal initiates the SDT, the terminal switches from the separate CG-SDT BWP to the initial BWP again, performs the SSB measurement on the initial BWP, and measures the RSRP value of the same SSB subset used in the RSRP reference value measurement as the measurement value.

The terminal compares the measurement value with the reference value to make the TA validity determination. If the TA is valid, the terminal switches to the separate CG-SDT BWP to perform the SDT. If the TA is invalid, the terminal may perform the random access-based SDT on the initial BWP in a case where the condition for the random access-based SDT is met. In addition, if a random access resource is configured on the separate CG-SDT BWP, the terminal may also switch to the separate CG-SDT BWP to perform the random access-based SDT.

In another embodiment, a parameter obtained by performing the SSB measurement is an RSRP as an example. Before entering the inactive state, the terminal first performs the SSB measurement on the active BWP and uses a measured RSRP as a reference value. At the same time, the network device configures the SSB beam and other measurement quantities (that are the same as the reference value) for the initial BWP via a high-level signaling. That is, the network device configures the separate SDT BWP with measurement information of a beam, the same as a beam used for measurement of the fourth parameter reference value. After the terminal enters the inactive state, it switches to the separate CG-SDT BWP. When the terminal needs to perform the SDT, it first switches to the initial BWP to perform the TA validity determination. If the TA is valid, the terminal switches to the separate CG-SDT BWP to perform the SDT. If the TA is invalid, the terminal may perform the random access-based SDT on the initial BWP in a case where the condition for the random access-based SDT is met. In addition, if the random access resource is configured on the separate CG-SDT BWP, the terminal may also switch to the separate CG-SDT BWP to perform the random access-based SDT.

It may be understood that the terminal involved in the above embodiments of the present invention switches from the initial BWP to the separate CG-SDT BWP, or from the separate CG-SDT BWP to the initial BWP, and such switching may be done by the terminal autonomously, or may be done by first reporting a switching request from the terminal to the network device, and instructing the terminal by the network device to perform the BWP switching.

The BWP switching method performed by the terminal provided by embodiments of the present invention may be understood as the BWP switching method for the terminal entering the inactive state from the connected state, configured with the separate CG-SDT BWP, and supporting the SDT. It may be determined that the target BWP to be switched to is the separate CG-SDT BWP or the initial BWP, thereby effectively supporting a configuration of the separate CG-SDT BWP to reduce a congestion level on the initial BWP.

Based on the same concept, embodiments of the present invention further provide a BWP switching method performed by a network device.

FIG. 7 is a flow chart showing a BWP switching method according to an illustrative embodiment. As shown in FIG. 7, the BWP switching method is used in the network device and includes a following step.

In S41, indication information is sent, the indication information is used to indicate a target BWP to be switched to when entering an inactive state from a connected state, and the target BWP includes an initial BWP or a separate SDT BWP.

In embodiments of the present invention, the network device indicates switching to the initial BWP or to the separate CG-SDT BWP, so that when the separate CG-SDT BWP is configured for a terminal that supports an SDT, the terminal enters the inactive state from the connected state and may determine the target BWP to be switched to is the separate CG-SDT BWP or the initial BWP, thereby effectively supporting the configuration of the separate CG-SDT BWP to reduce the congestion level on the initial BWP.

In embodiments of the present invention, the network device may further configure, according to the indicated target BWP to be switched to and the result of whether a separate CG-SDT BWP configured to the terminal is configured with an SSB, the terminal with beam information for performing an SSB measurement, so that the TA validity determination in the SDT is performed by the terminal.

In an implementation, the target BWP includes the initial BWP, and the separate CG-SDT BWP is not configured with the SSB. The network device configures the initial BWP with measurement information of a beam, the same as a beam used for measurement of a first parameter reference value. The first parameter reference value is a parameter measurement value measured on the initial BWP or an active BWP.

In an implementation, the target BWP to be switched to includes the initial BWP, and the separate CG-SDT BWP is configured with the SSB. The network device configures the separate CG-SDT BWP with measurement information of a beam, the same as a beam used for measurement of a second parameter reference value. The second parameter reference value includes a parameter measurement value measured on the initial BWP, the separate SDT BWP or an active BWP before entering the inactive state.

In an implementation, the target BWP to be switched to includes the separate CG-SDT BWP, and the separate CG-SDT BWP includes the initial BWP, or the separate CG-SDT BWP is configured with one or more parameters for at least one of the following signals or channels: SSB, paging message, system message, and random access channel. The network device configures the separate CG-SDT BWP with measurement information of a beam, the same as a beam used for measurement of a third parameter reference value. The third parameter reference value includes a parameter measurement value measured on the separate CG-SDT BWP or an active BWP before entering the inactive state.

In an implementation, the target BWP to be switched to includes the separate CG-SDT BWP, and no SSB is configured in the separate CG-SDT BWP. The network device configures the initial BWP with measurement information of a beam, the same as a beam used for measurement of a fourth parameter reference value. The fourth parameter reference value includes a parameter measurement value on measured the initial BWP or an active BWP before entering the inactive state.

It may be understood that the BWP switching method performed by the network device in embodiments of the present invention corresponds to the BWP switching method performed by the terminal in the above embodiments. Therefore, for the parts where the description of the BWP switching method performed by the network device is not detailed enough, reference may be made to the above BWP switching method performed by the terminal, which will not be described in detail here.

It may be further understood that the BWP switching method provided by embodiments of the present invention may be applied in a scenario where the terminal interacts with the network device to implement the BWP switching. For the functions implemented by the terminal and the network device involved in the specific implementation process, reference may be made to the relevant descriptions involved in the above embodiments, which will not be described in detail here.

It should be noted that those skilled in the art may understand that the various implementations/examples mentioned above in embodiments of the present invention may be used in conjunction with the foregoing embodiments or may be used separately. The implementation principle is the same no matter the embodiments/implementations/examples are used alone or in conjunction with each other. In the present invention, some embodiments are described in the case where implementations are applied together. Those skilled in the art may understand that such illustrations do not limit embodiments of the present invention.

Based on the same concept, embodiments of the present invention further provide a BWP switching apparatus.

It may be understood that, in order to implement the above-mentioned functions, the BWP switching apparatus provided by embodiments of the present invention includes corresponding hardware structures and/or software modules for performing respective functions. Embodiments of the present invention may be implemented in a form of hardware or a combination of hardware and computer software in connection with units and algorithm steps of various examples disclosed in embodiments of the present invention. Whether a certain function is performed by hardware or by hardware driven by computer software depends on specific applications and design constraints of the technical solution. Those skilled in the art may use different methods to implement the described function for each specific application, but such implementations should not be regarded as beyond the scope of the technical solutions of embodiments of the present invention.

FIG. 8 is a block diagram showing a BWP switching apparatus according to an illustrative embodiment. Referring to FIG. 8, the BWP switching apparatus 100 is applied to a terminal and includes a processing unit 101.

The processing unit 101 is configured to, in response to determining that the terminal is configured with an initial BWP and a separate CG-SDT BWP and the terminal is triggered to enter from a connected state to an inactive state, determine a target BWP to be switched to for the terminal, in which the target BWP to be switched to includes the initial BWP or the separate SDT BWP; and switch from an active BWP to the target BWP.

In an implementation, the processing unit 101 determines the target BWP to be switched to for the terminal by using at least one manner of the followings: determining the target BWP to be switched to for the terminal based on a communication protocol; determining the target BWP to be switched to for the terminal based on a predefined condition; determining the target BWP to be switched to for the terminal based on indication information, where the indication information is used to indicate the target BWP to be switched to when entering the inactive state from the connected state.

In an implementation, the target BWP to be switched to for the terminal is the initial BWP, and the processing unit 101 is further configured to determine that a small data packet to be transmitted exists, and determine that a TA corresponding to the SDT is valid; and switch from the initial BWP to the separate CG-SDT BWP and perform a semi-statically configured SDT.

In an implementation, the separate CG-SDT BWP is not configured with an SSB, and the processing unit 101 is configured to determine that the TA corresponding to the SDT is valid based on a first parameter reference value and a first parameter measurement value. The first parameter reference value includes a parameter measurement value measured on the initial BWP or an active BWP before entering the inactive state, and the first parameter measurement value is obtained by measuring a beam, the same as a beam measured to obtain the first parameter reference value, on the initial BWP after entering the inactive state.

In an implementation, the target BWP to be switched to for the terminal is determined to be the initial BWP based on the communication protocol or the indication information, the separate CG-SDT BWP is configured with an SSB, and the processing unit 101 is configured to: determine that the TA corresponding to the SDT is valid based on a second parameter reference value and a second parameter measurement value. The second parameter reference value includes a parameter measurement value measured on the initial BWP, the separate CG-SDT BWP or an active BWP before entering the inactive state, and the second parameter measurement value is obtained by measuring a beam, the same as a beam measured to obtain the second parameter reference value, on the separate CG-SDT BWP or the initial BWP after entering the inactive state.

In an implementation, the processing unit 101 is further configured to: determine that the SDT is completed, and switch from the separate CG-SDT BWP to the initial BWP.

In an implementation, the target BWP to be switched to for the terminal is the separate CG-SDT BWP, and the processing unit 101 is further configured to: determine that a small data packet to be transmitted exists, and determine that a TA corresponding to the SDT is valid; and perform a semi-statically configured SDT on the separate CG-SDT BWP.

In an implementation, the separate CG-SDT BWP includes the initial BWP, or the separate CG-SDT BWP is configured with one or more parameters for at least one of the following signals or channels: SSB, paging message, system message, and random access channel. The processing unit 101 is configured to: determine that the TA corresponding to the SDT is valid based on a third parameter reference value and a third parameter measurement value. The third parameter reference value includes a parameter measurement value measured on the separate CG-SDT BWP or an active BWP before entering the inactive state, and the third parameter measurement value is obtained by measuring a beam, the same as a beam measured to obtain the third parameter reference value, on the separate CG-SDT BWP after entering the inactive state.

In an implementation, the target BWP to be switched to for the terminal is determined to be the separate CG-SDT BWP based on the communication protocol or the indication information, and no SSB is configured in the separate CG-SDT BWP. The processing unit 101 is configured to: determine that the TA corresponding to the SDT is valid based on a fourth parameter reference value and a fourth parameter measurement value. The fourth parameter reference value includes a parameter measurement value measured on the initial BWP or an active BWP before entering the inactive state, and the fourth parameter measurement value is obtained by measuring a beam, the same as a beam measured to obtain the fourth parameter reference value, on the initial BWP after entering the inactive state.

In an implementation, the processing unit 101 is further configured to: determine that the small data packet to be transmitted exists, and determine that the TA corresponding to the SDT is invalid; and perform a random access-based SDT on the initial BWP or the separate CG-SDT BWP.

In an implementation, the processing unit 101 is configured to determine the target BWP to be switched to for the terminal based on the predefined condition by following manners: determining that a condition for switching to the separate CG-SDT BWP is met and switching to the separate CG-SDT BWP; or determining that a condition for switching to the separate CG-SDT BWP is not met and switching to the initial BWP. The condition for switching to the separate CG-SDT BWP includes: the separate CG-SDT BWP being configured with one or more parameters for at least one of the following signals or channels: SSB, paging message, system message, and random access channel.

FIG. 9 is a block diagram showing a BWP switching apparatus according to an illustrative embodiment. Referring to FIG. 9, the BWP switching apparatus 200 is applied to a network device and includes a sending unit 201.

The sending unit 201 is configured to send indication information. The indication information is used to indicate a target BWP to be switched to when entering an inactive state from a connected state, and the target BWP includes an initial BWP or a separate CG-SDT BWP.

In an implementation, the BWP switching apparatus 200 further includes a processing unit 202. The target BWP includes the initial BWP, and the separate CG-SDT BWP is not configured with an SSB. The processing unit is configured to: configure the initial BWP with measurement information of a beam, the same as a beam used for measurement of a first parameter reference value. The first parameter reference value is a parameter measurement value measured on the initial BWP or an active BWP.

In an implementation, the BWP switching apparatus 200 further includes a processing unit 202. The target BWP includes the initial BWP and the separate CG-SDT BWP is configured with an SSB. The processing unit 202 is configured to: configure the separate CG-SDT BWP with measurement information of a beam, the same as a beam used for measurement of a second parameter reference value. The second parameter reference value includes a parameter measurement value measured on the initial BWP, the separate CG-SDT BWP or an active BWP before entering the inactive state.

In an implementation, the BWP switching apparatus 200 further includes a processing unit 202. The target BWP includes the separate CG-SDT BWP, the separate CG-SDT BWP includes the initial BWP or the separate CG-SDT BWP is configured with one or more parameters for at least one of the following signals or channels: SSB, paging message, system message, and random access channel. The processing unit 202 is configured to: configure the separate CG-SDT BWP with measurement information of a beam, the same as a beam used for measurement of a third parameter reference value. The third parameter reference value includes a parameter measurement value measured on the separate CG-SDT BWP or an active BWP before entering the inactive state.

In an implementation, the BWP switching apparatus 200 further includes a processing unit 202. The target BWP includes the separate CG-SDT BWP, and no SSB is configured in the separate CG-SDT BWP. The processing unit 202 is configured to: configure the initial BWP with measurement information of a beam, the same as a beam used for measurement of a fourth parameter reference value. The fourth parameter reference value includes a parameter measurement value on measured the initial BWP or an active BWP before entering the inactive state.

With respect to the apparatus in the above embodiments, the specific manners for performing operations for individual modules therein have been described in detail in the embodiments regarding the methods, which will not be elaborated herein.

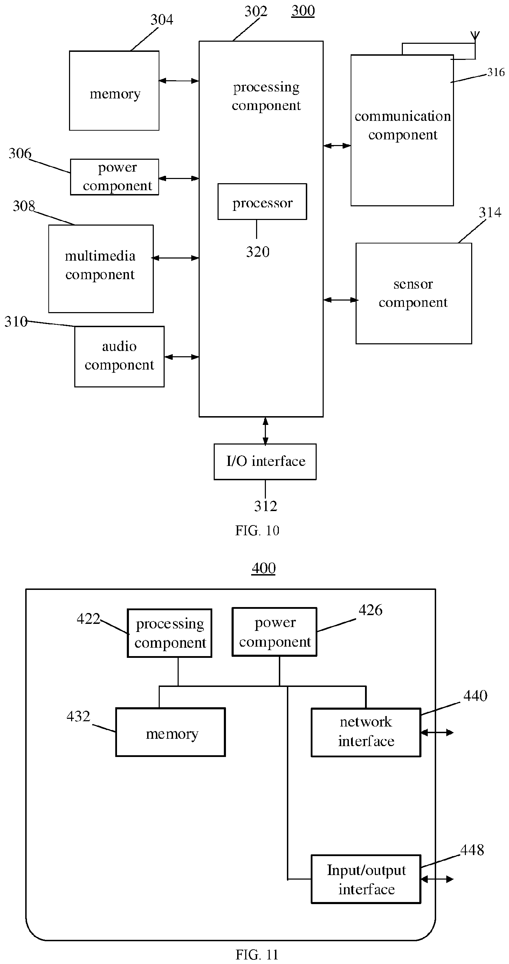

FIG. 10 is a block diagram showing a device for BWP switching according to an illustrative embodiment. The device 300 for BWP switching may be provided as the terminal involved in the above embodiments. For example, the device 300 may be a mobile phone, a computer, a digital broadcast terminal, a messaging device, a game console, a tablet device, a medical device, a fitness device, a personal digital assistant, or the like.

Referring to FIG. 10, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300. The sensor component 314 may also detect a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

FIG. 11 is a block diagram showing a device for BWP switching according to an illustrative embodiment. For example, the device 400 for BWP switching may be provided as a network device. Referring to FIG. 11, the device 400 includes a processing component 422, which further includes one or more processors, and a memory resource represented by a memory 432 configured to store instructions executable by the processing component 422, such as application programs. The application programs stored in the memory 432 may include one or more modules each corresponding to a set of instructions. In addition, the processing component 422 is configured to execute instructions to perform the above-mentioned method.

The device 400 may also include a power component 426 configured to perform the power management of the device 400, a wired or wireless network interfaces 440 configured to connect the device 400 to a network, and an input/output (I/O) interface 448. The device 400 may operate an operating system stored in the memory 432, such as Windows ServerTM, Mac OS XTM, UnixTM, LinuxTM, FreeBSDTM, or the like.

In an illustrative embodiment, there is also provided a storage medium including instructions, such as included in the memory 432, executable by the processing component 422 in the device 400, for completing the above-mentioned method. For example, the non-transitory computer-readable storage medium may be a ROM, a random access memory (RAM), a CD-ROM, a magnetic tape, a floppy disc, an optical data storage device, and the like

It is further understood that "a plurality of' in this disclosure refers to two or more, and other quantifiers are similar thereto. The term "and/or" describes an associated relationship of associated objects, and means that there may be three relationships. For example, the expression of A and/or B indicates three cases, i.e., A exists alone, A and B exist at the same time, and B exists alone. The character "P' generally indicates that contextual objects are in an "or" relationship. "A/an", "said", and "the" in singular forms are intended to include plural forms, unless clearly indicated in the context otherwise.

It is further understood that terms such as "first" and "second" are used to describe various information, but these information should not be limited by these terms. These terms are only used for distinguishing information of the same type from each other and do not denote a particular order or degree of importance. As a matter of fact, the terms such as "first" and "second" may be used interchangeably. For example, first information may also be referred to as second information, and similarly, the second information may also be referred to as the first information, without departing from the scope of embodiments of the present invention.

It is further understood that although operations in embodiments of the present invention are described in a specific order in the accompanying drawings, it should not be understood that these operations are required to be performed in the specific order shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claim scopes.

## Claims

1. A bandwidth part, BWP, switching method, performed by a terminal and comprising:
in response to the terminal being configured with an initial BWP and a separate small data transmission, SDT, BWP and the terminal being triggered to enter from a connected state to an inactive state, determining a target BWP to be switched to for the terminal, wherein the target BWP comprises the initial BWP or the separate SDT BWP; and
switching from an active BWP to the target BWP.

2. The BWP switching method according to claim 1, wherein determining the target BWP comprises at least one of:
determining the target BWP for the terminal based on a communication protocol;
determining the target BWP for the terminal based on a predefined condition;
determining the target BWP for the terminal based on indication information, wherein the indication information is used to indicate the target BWP to be switched to when entering the inactive state from the connected state.

3. The BWP switching method according to claim 2, wherein the target BWP to be switched to for the terminal is the initial BWP, and the BWP switching method further comprises:
determining that a small data packet to be transmitted exists, and determining that a time advance, TA, corresponding to an SDT is valid; and
switching from the initial BWP to the separate SDT BWP and performing a semi-statically configured SDT.

4. The BWP switching method according to claim 3, wherein the separate SDT BWP is not configured with a synchronization signal and PBCH block, SSB, and determining that the TA corresponding to the SDT is valid comprises:
determining that the TA corresponding to the SDT is valid based on a first parameter reference value and a first parameter measurement value, wherein the first parameter reference value comprises a parameter measurement value measured on the initial BWP or an active BWP before entering the inactive state, and the first parameter measurement value is obtained by measuring a beam, the same as a beam measured to obtain the first parameter reference value, on the initial BWP after entering the inactive state.

5. The switching method according to claim 3, wherein the target BWP to be switched to for the terminal is determined to be the initial BWP based on the communication protocol or the indication information, the separate SDT BWP is configured with an SSB, and determining that the TA corresponding to the SDT is valid comprise:
determining that the TA corresponding to the SDT is valid based on a second parameter reference value and a second parameter measurement value, wherein the second parameter reference value comprises a parameter measurement value measured on the initial BWP, the separate SDT BWP or an active BWP before entering the inactive state, and the second parameter measurement value is obtained by measuring a beam, the same as a beam measured to obtain the second parameter reference value, on the separate SDT BWP or the initial BWP after entering the inactive state.

6. The BWP switching method according to claim 3, further comprising:
determining that the SDT is completed, and switching from the separate SDT BWP to the initial BWP.

7. The BWP switching method according to claim 2, wherein the target BWP to be switched to for the terminal is the separate SDT BWP, and the method further comprises:
determining that a small data packet to be transmitted exists, and determining that a TA corresponding to the SDT is valid; and
performing a semi-statically configured SDT on the separate SDT BWP.

8. The BWP switching method according to claim 7, wherein the separate SDT BWP comprises the initial BWP, or the separate SDT BWP is configured with one or more parameters for at least one of the following signals or channels: SSB, paging message, system message, and random access channel; and
determining that the TA corresponding to the SDT is valid comprises:
determining that the TA corresponding to the SDT is valid based on a third parameter reference value and a third parameter measurement value, wherein the third parameter reference value comprises a parameter measurement value measured on the separate SDT BWP or an active BWP before entering the inactive state, and the third parameter measurement value is obtained by measuring a beam, the same as a beam measured to obtain the third parameter reference value, on the separate SDT BWP after entering the inactive state.

9. The BWP switching method according to claim 7, wherein the target BWP to be switched to for the terminal is determined to be the separate SDT BWP based on the communication protocol or the indication information, and no SSB is configured in the separate SDT BWP; and
determining that the TA corresponding to the SDT is valid comprises:
determining that the TA corresponding to the SDT is valid based on a fourth parameter reference value and a fourth parameter measurement value, wherein the fourth parameter reference value comprises a parameter measurement value measured on the initial BWP or an active BWP before entering the inactive state, and the fourth parameter measurement value is obtained by measuring a beam, the same as a beam measured to obtain the fourth parameter reference value, on the initial BWP after entering the inactive state.

10. The BWP switching method according to any one of claims 3 to 9, further comprising:
determining that the small data packet to be transmitted exists, and determining that the TA corresponding to the SDT is invalid; and
performing a random access-based SDT on the initial BWP or the separate SDT BWP.

11. The BWP switching method according to claim 2, wherein determining the target BWP to be switched to for the terminal based on the predefined condition comprises:
determining that a condition for switching to the separate SDT BWP is met, and switching to the separate SDT BWP; or
determining that a condition for switching to the separate SDT BWP is not met, and switching to the initial BWP;
wherein the condition for switching to the separate SDT BWP comprises: the separate SDT BWP being configured with one or more parameters for at least one of the following signals or channels: SSB, paging message, system message, and random access channel.

12. A BWP switching method, performed by a network device and comprising:
sending indication information, wherein the indication information is used to indicate a target BWP to be switched to when entering an inactive state from a connected state, and the target BWP comprises an initial BWP or a separate SDT BWP.

13. The BWP switching method according to claim 12, wherein the target BWP comprises the initial BWP, the separate SDT BWP is not configured with an SSB, and the method further comprises:
configuring the initial BWP with measurement information of a beam, the same as a beam used for measurement of a first parameter reference value, wherein the first parameter reference value is a parameter measurement value measured on the initial BWP or an active BWP.

14. The BWP switching method according to claim 12, wherein the target BWP comprises the initial BWP, the separate SDT BWP is configured with an SSB, and the method further comprises:
configuring the separate SDT BWP with measurement information of a beam, the same as a beam used for measurement of a second parameter reference value, wherein the second parameter reference value comprises a parameter measurement value measured on the initial BWP, the separate SDT BWP or an active BWP before entering the inactive state.

15. The BWP switching method according to claim 12, wherein the target BWP comprises the separate SDT BWP, the separate SDT BWP comprises the initial BWP or the separate SDT BWP is configured with one or more parameters for at least one of the following signals or channels: SSB, paging message, system message, and random access channel, and the method further comprises:
configuring the separate SDT BWP with measurement information of a beam, the same as a beam used for measurement of a third parameter reference value, wherein the third parameter reference value comprises a parameter measurement value measured on the separate SDT BWP or an active BWP before entering the inactive state.

16. The BWP switching method according to claim 12, wherein the target BWP comprises the separate SDT BWP, no SSB is configured in the separate SDT BWP, and the method further comprises:
configuring the initial BWP with measurement information of a beam, the same as a beam used for measurement of a fourth parameter reference value, wherein the fourth parameter reference value comprises a parameter measurement value on measured the initial BWP or an active BWP before entering the inactive state.

17. A BWP switching apparatus, comprising:
a processing unit configured to, in response to determining that the terminal is configured with an initial BWP and a separate SDT BWP and the terminal is triggered to enter from a connected state to an inactive state, determine a target BWP to be switched to for the terminal, wherein the target BWP comprises the initial BWP or the separate SDT BWP; and switch from an active BWP to the target BWP.

18. A BWP switching apparatus, comprising:
a sending unit configured to send indication information, wherein the indication information is used to indicate a target BWP to be switched to when entering an inactive state from a connected state, and the target BWP comprises an initial BWP or a separate SDT BWP.

19. A BWP switching device, comprising:
a processor; and
a memory configured to store processor-executable instructions;
wherein the processor is configured to: execute the BWP switching method according to any one of claims 1 to 11.

20. A BWP switching device, comprising:
a processor; and
a memory configured to store processor-executable instructions;
wherein the processor is configured to: execute the BWP switching method according to any one of claims 12 to 16.

21. A storage medium, having stored therein instructions that, when executed by a processor of a terminal, cause the terminal to perform the BWP switching method according to any one of claims 1 to 11.

22. A storage medium, having stored therein instructions that, when executed by a processor of a network device, cause the network device to perform the BWP switching method according to any one of claims 12 to 16.
